# EUROPÄISCHE PATENTSCHRIFT

(11) **EP 1 896 518 B1**
(45) Veröffentlichungstag und Bekanntmachung des Hinweises auf die Patenterteilung: **01.09.2010**
(21) Anmeldenummer: 06763378.4
(22) Anmeldetag: 30.05.2006
(51) Int. Cl.: C08G 18/42, C08L 101/00, C08G 101/00

(54) **PORÖSE POLYISOCYANAT-POLYADDITIONSPRODUKTE**
POROUS POLYISOCYANATE POLYADDITION PRODUCTS
PRODUITS DE POLYADDITION DE POLYISOCYANATE POREUX

(30) Priorität: 03.06.2005 DE 102005025970
(43) Veröffentlichungstag der Anmeldung: 12.03.2008
(73) Patentinhaber: BASF SE, 67056 Ludwigshafen (DE)
(72) Erfinder: SCHMIDT, Daniel, Dracut, MA 01826 (US); SCHÄDLER, Volker, F-67000 Strasbourg (FR)
(86) Internationale Anmeldenummer: PCT/EP2006/062728
(87) Internationale Veröffentlichungsnummer: WO 2006/128872

(56) Entgegenhaltungen:
- WO-A-02/10189
- WO-A-96/36654
- US-A- 4 248 975
- US-A1- 2002 061 936

## Beschreibung

Die Erfindung bezieht sich auf Verfahren zur Herstellung von porösen Polyisocyanat-Polyadditionsprodukte, bevorzugt Polyurethane und/oder Polyharnstoffe, besonders bevorzugt Polyurethanen, die gegebenenfalls Hamstoffstrukturen enthalten können, bevorzugt Polyurethanformkörpern, insbesondere mit Aerogel-artiger Struktur auf der Basis von Polyurethanen, durch Umsetzung von (a) Isocyanaten mit (b) gegenüber Isocyanaten reaktiven Verbindungen in Gegenwart von gegenüber Isocyanaten inerten Lösungsmittel (f) und anschließendem Entfernen des Lösungsmittels (f) aus dem Polyurethan. Des weiteren bezieht sich die Erfindung auf derart erhältliche poröse Polyisocyanat-Polyadditionsprodukte, bevorzugt Polyurethane und/oder Polyharnstoffe, besonders bevorzgut Polyurethane, bevorzugt Polyurethanformkörper, besonders bevorzugt mit Aerogel-artiger Struktur auf der Basis von Polyurethanen, insbesondere poröse Polyurethane mit einer Dichte zwischen 30 kg/m³ und 500 kg/m³ und einer intrinsischen Oberfläche > 50 m²/g bestimmt durch Stickstoff-Sorptionsmessung nach DIN 66131 auf der Basis von gegenüber Isocyanaten reaktiven Verbindungen (b) mit einer Funktionalität gegenüber Isocyanaten, bevorzugt Hydroxylgruppen, von mindestens 6, bevorzugt 6 bis 100, besonders bevorzugt 10 bis 60 und einem Molekulargewicht von mindestens 1000 g/mol, bevorzugt 1500 g/mol bis 10000 g/mol, besonders bevorzugt 1500 g/mol bis 6000 g/mol, insbesondere 2000 g/mol bis 6000 g/mol.

Poröse Polyisocyanat-Polyadditionsprodukte, die in Gegenwart eines Lösungsmittels hergestellt werden, sowie die Herstellung dieser Produkte sind allgemein bekannt. So beschreibt US 3 574 150 offenzellige Polyurethane mit einer Porosität von mindestens 50 % und einer Dichte 100 bis 500 kg/m³, die allerdings durch einen Fällungsprozess sphärische partikuläre Strukturen im Mikrometerbereich enthalten und auf Polyaryl-Polyalkylen-Polyisocyanaten (Polymer-MDI) basieren. WO 96/36654, WO 96/37539 und WO 98/44028 offenbaren Aerogele auf der Basis von Isocyanuraten.

WO 95/03358 beschreibt Aerogele allgemein auf der Basis von Isocyanaten. "Aerogel" im Sinne der genannten Schriften bedeutet jeweils, dass beim Trocknungsschritt ein Fluid im superkritischen Zustand aus dem Gelkörper entfernt wird. WO 98/44013, und WO 00/24799 beschreiben die Herstellung von Aerogel-artigen Verbindungen auf der Basis von Isocyanuraten, d.h. überwiegend durch Trimerisierung von Isocyanaten erhaltene. Gele, für deren Trocknung überkritischen Bedingungen nicht zwangsläufig erforderlich sind. In diesen Schriften wird weiterhin beschrieben, dass neben der Trimerisierung der Isocyanate auch Copolymere eingesetzt werden können, die Isocyanat-reaktive Gruppen enthalten, insbesondere Copolymere aus Styrol und Hydroxyacrylaten.

Nachteilig an diesen aus dem Stand der Technik bekannten porösen Produkten ist, dass entwedersuperkritischen Fluide eingesetzt werden müssen (WO 95/03358, WO 96/36654, WO 96/37539, WO 98/44028), was hohe Drucke bzw. Temperaturen bedeutet (z.B, für CO₂ T_{c} = 31 °C; p_{c} = 74 bar) und daher kostspielig ist, oder aber es werden Produkte erhalten, die zu erheblichem Maße auf Isocyanuraten basieren. Es ist bekannt, dass sich diese Verbindungsklasse durch eine hohe Sprödigkeit auszeichnet und daher bezüglich des mechanischen Verhaltens nachteilig sind im Vergleich zu lsocyanat-basierten Materialien, bei denen die Isocyanatgruppen mehrheitlich zu Urethangruppen umgesetzt wurden. Ein weiterer Nachteil eines auf lsocyanuratVerknüpfungen basierten Netzwerkes ist, dass ein vollständiger Umsatz der Isocyanatgruppen zu lsocyanuraten nur durch lange Reaktionszeiten zu realisieren ist.

Die Aufgabe der vorliegenden Erfindung bestand somit darin, Verfahren zur Herstellung von porösen Polyisocyanat-Polyadditionsprodukten, bevorzugt Polyurethanen, bevorzugt Polyurethanformkörpern, insbesondere Aerogel-artige Materialien auf der Basis von Polyurethanen, durch Umsetzung von (a) Isocyanaten mit (b) gegenüber Isocyanaten reativen Verbindungen in Gegenwart von gegenüber Isocyanaten inerten Lösungsmittel (f) zu entwickeln, das einfach, kostengünstig und reproduzierbar ist und womit Produkte erhalten werden, die über sehr gute stoffliche und insbesondere mechanische Eigenschaften verfügen. Insbesondere sollten poröse Produkte entwickelt werden, die über eine möglichst hohe Porosität bei gleichzeitig möglichst kleiner Porengröße verfügen sollten. Dabei sollten die porösen Produkte einfach und reproduzierbar zugänglich sein.

Diese Aufgaben konnten dadurch gelöst werden, dass man als (b) gegenüber Isocyanaten reaktive Verbindungen solche einsetzt, die eine Funktionalität gegenüber Isocyanaten, bevorzugt Hydroxylgruppen, von mindestens 6, bevorzugt 6 bis 100, besonders bevorzugt 10 bis 60 und ein Molekulargewicht, bevorzugt gewichtsmittleres Molekulargewicht von mindestens 1000 g/mol, bevorzugt 1500 g/mol bis 10000 g/mol, besonders bevorzugt 1500 g/mol bis 6000 g/mol aufweisen.

Ein besonderer Vorteil des erfindungsgemäßen Verfahrens und damit der erfindungsgemäßen Produkte besteht in ihrer mechanischen Stabilität sowohl während des Herstellungsprozesses in Gegenwart des Lösungsmittels als auch während und nach der Trocknung. Zudem weisen die erfindungsgemäßen Produkte wie gewünscht eine geringe Sprödigkeit auf. Aufgrund des Einsatzes der erfindungsgemäßen Isocyanatreaktiven Komponente, die sich durch ihre hohe Funktionalität in Kombination mit dem hohen Molekulargewicht auszeichnet und die man auch als hyperverzweigt bezeichnen kann bzw. dendrimere Strukturen enthält. Bedingt durch den hohen Verzweigungsgrad der Isocyanat-reaktiven Komponente wird in dem Polyurethan-Aerogel ein rigides Netzwerk erreicht, das es erlaubt, auf superkritische Bedingungen beim Trocknen zu verzichten und gleichzeitig ein Material geringer Sprödigkeit zu erzeugen.

Als gegenüber Isocyanaten reaktive Gruppen in den gegenüber Isocyanaten reaktive Verbindungen (b) sind solche geeignet, die über mindestens ein aktives Wasserstoffatom verfügen. Beispiele für solche Gruppen sind Hydroxylgruppen und/oder primäre und/oder sekundäre Aminogruppen, bevorzugt Hydroxylgruppen. Als erfindungsgemäße gegenüber Isocyanaten reaktive Verbindungen (b) kommen somit Polyetherpolyalkohole, Polyesterpolyalkohole, Polyether-polyesteralkohole, Polythioether-polyole, hydroxylgruppenhaltigen Polyacetale und hydroxylgruppenhaltigen aliphatischen Polycarbonate oder Mischungen aus mindestens zwei der genannten Polyole. Bevorzugt sind als gegenüber Isocyanaten reaktive Verbindungen (b) Ether und/oder Ester und/oder Verbindungen, die Ester und Etherstrukturen enthalten. Derartige Verbindungen sind allgemein bekannt und können durch bekannte Veresterung und/oder Alkoxylierung hergestellt werden.

Die erfindungsgemäßen gegenüber Isocyanaten reaktive Verbindungen weisen bevorzugt eine Hydroxylzahl von mindestens 100 mg KOH/g, besonders bevorzugt 150 mg KOH/g bis 550 mg KOH/g auf. Zusätzlich zu den erfindungswesentlichen Parametern Funktionalität und Molekulargewicht ist somit die Hydroxylzahl der Polyole geeignet, den besonders bevorzugten hyperverzweigten Aufbau der besonders bevorzugten Polyole zu kennzeichnen.

Unter "hyperverzweigt" wird im Zusammenhang mit der vorliegenden Erfindung verstanden, dass der Verzweigungsgrad (Degree of Branching, DB), das heißt die mittlere Anzahl dendritischer Verknüpfungen plus mittlere Anzahl der Endgruppen pro Molekül, 10 bis 99.9 %, bevorzugt 20 bis 99 %, besonders bevorzugt 20 - 95 % beträgt.

Unter "dendrimer" wird im Zusammenhang mit der vorliegenden Erfindung verstanden, dass der Verzweigungsgrad 99,9 - 100% beträgt. Zur Definition des "Degree of Branching" siehe H. Frey et al., Acta Polym. 1997, 48, 30. Die Glastemperatur beträgt vorzugsweise von -50°C bis 140°C und insbesondere von -50 bis 100°C (mittels DSC, gemessen nach DIN 53765). Bezüglich hyperverzweigter Polymere wird auch auf H. Frey et al., Chem. Eur. J. 2000, 6, No. 14, 2499 verwiesen. Die Herstellung hyperverzweigter Polyalkohole ist z.B. in EP-A 1 501 882 und EP-A 1 537 166 beschrieben.

Besonders bevorzugt setzt man als gegenüber Isocyanaten reaktive Verbindungen stark verzweigte Estergruppen enthaltende Polyole ein. Derartige dendritische Polyesterole sind zum Beispiel die aus 2,2 Dimethylolpropionsäure (Bis-MPA) erhältlichen Kondensationsprodukte, die Perstorp AB unter den Marken Boltorn® vertreibt, z.B. Boltorn® H20, H30 und H40.

Die Herstellung von porösen Polyurethanen ist aus dem eingangs dargestellten Stand der Technik allgemein bekannt.

Bevorzugt sind Verfahren, bei denen man die Umsetzung von (a) Isocyanaten mit (b) gegenüber Isocyanaten reaktiven Verbindungen in Gegenwart von einem die Isocyanatgruppen aktivierendem Katalysator (d), die an späterer Stelle beispielhaft beschrieben werden, durchführt, bevorzugt ein die Urethanbildung katalysierender Katalysator, bevorzugt Zinn- und/oder Titan-organische Verbindung und/oder geeignetes Amin, besonders bevorzugt ein Zinnsalz oder eine Aminobase, bevorzugt tertiäres Amin, ganz bevorzugt Dibutylzinn-Salze oder tertiäre aliphatische Amine. Die Katalysatoren werden bevorzugt zusammen mit den gegenüber Isocyanaten reaktiven Verbindungen (b) im Lösemittel (f) gelöst. Die Gelierung wird durch Vereinen der Katalysatorenthaltenden Lösung der Isocyanat-reaktiven Komponente mit der stöchiometrischen Menge an Isocyanat gestartet. Der Gehalt an Katalysatoren (d) beträgt bevorzugt zwischen 0,02 und 3 Gew.-%, besonders bevorzugt zwischen 0,1 und 2 Gew.-%, bezogen auf das Gesamtgewicht des porösen Polyurethans. Der Katalysator kann durch intensiven Lösemittelaustausch aus dem Polymer entfernt werden. Durch Wahl der Katalysatormenge und Konzentration des Lösemittels lässt sich die Gelierungszeit im Bereich zwischen wenigen Minuten bis Stunden einstellen.

Die erfindungsgemäßen porösen Polyurethane zeichnen sich dadurch aus, dass beim Trocknen des Gelkörpers das Lösemittel im subkritischen Zustand entfernt werden kann (p<p_{c}, T<T_{c}), bevorzugt durch Anlegen eines leichten Vakuums. Zum Einstellen der Porosität kann ebenso ein Lösemitteltausch nach der Gelierung des Polyurethankörpers vorgenommen wird. Es ist vorteilhaft, die Trocknung von einem Lösemittel niedrigerer Oberflächenspannung im Vergleich zum Ausgangslösemittel vorzunehmen. Oder aber die Polymerisation wird von vornherein in einem Lösemittel vorgenommen, das von der Natur ist, dass das resultierende Polyurethan Netzwerk mechanisch so robust ist, dass es den Kapillarkräften des subkritischen Trocknens ohne signifikantes Schrumpfen widersteht. Bevorzugt sind Lösemittel in denen zunächst die Reaktionskomponenten homogen gelöst werden können jedoch das daraus erhaltene Polyurethan Netzwerk so geringfügig wie möglich plastifiziert ist. Weiterhin werden Reaktionskomponenten bevorzugt, die eine hohe intrinsische Kettensteifheit besitzen, insbesondere Isocyanate und Isocyanat-reaktive Verbindungen mit einer hohen Funktionalität und Verzweigungsgrad.

Als Lösungsmittel (f), in dessen Gegenwart die Umsetzung der Isocyanate mit der Komponente (b) und gegebenenfalls (c) erfolgt, können die aus dem Stand der Technik allgemein bekannten Lösungsmittel eingesetzt werden, die gegenüber Isocyanaten inert sind. Derartige Lösungsmittel sind in der WO 00/24799, Seite 3, Zeile 28 bis Seite 5, Zeile 14 beschrieben. Bevorzugt setzt man als Lösungsmittel (f) ein Lösungsmittel ein, in dem die eingesetzten Isocyanate und Isocyanat-reaktiven Komponenten bei 298 K zu mindestens 1 Gew.-%, bezogen auf das Gesamtgewicht der Mischung, löslich oder dispergierbar sind und durch Umsetzung der (a) Isocyanate mit den (b) gegenüber Isocyanaten reaktiven Verbindungen ein Gelkörper resultiert, in dem der Anteil an präzipitiertem Reaktionsprodukt kleiner als 1 Gew.-%, bezogen auf das Gesamtgewicht der Mischung, ist. Die Menge an präzipitiertem Produkt wird gravimetrisch bestimmt, in dem die Reaktionsmischung vor dem Gelpunkt über ein geeignetes Filter filtriert wird. Besonders bevorzugt werden als Lösungsmittel (f) aliphatische Ketone und Ester einsetzt, bevorzugt Butanon, Propanon, Ethlyacetat, Butylacetat oder aliphatische Ether, bevorzugt Tetrahydrofuran, Tetrahydropyran eingesetzt.

Besonders bevorzugt erfolgt das erfindungsgemäße Verfahren derart, dass die Isocyanate (a) und die gegenüber Isocyanaten reaktiven Verbindungen getrennt im gleichen oder verschiedenen, bevorzugt gleichen Lösungsmittel (f) gelöst werden und anschließend die zwei Komponenten (a) und (b) jeweils gelöst im Lösungsmittel (f) durch Vermischen zur Reaktion gebracht werden.

Der Gewichtsanteil des Lösungsmittels (f) bezogen auf das Gesamtgewicht der bei der Herstellung des Polyurethanschaumstoffes eingesetzten Komponenten einschließlich des Lösungsmittels beträgt bevorzugt zwischen 50 Gew.-% und 99 Gew.-%, besonders bevorzugt zwischen 60 Gew.-% und 95 Gew.-%. Werden, wie oben dargestellt, die Komponenten (a) und (b) getrennt jeweils im Lösungsmittel (f) gelöst, so beträgt das Gewicht des Lösungsmittels (f) in der jeweiligen Komponenten bevorzugt zwischen 50 Gew.-% und 99 Gew.-%, besonders bevorzugt zwischen 60 Gew.-% und 95 Gew.-%, jeweils bezogen auf das Gesamtgewicht der jeweiligen Mischung enthaltend (a) oder (b) sowie jeweils das Lösungsmittel (f).

Nach der Umsetzung der Isocyanate (a) mit den gegenüber Isocyanaten reaktiven Verbindungen (b) sowie gegebenenfalls (c) wird das Lösungsmittel (f) aus dem Umsetzungsprodukt entfernt. Dies kann durch unterschiedliche allgemein bekannte Verfahren erfolgen, z.B. durch Trocknung oder Abgießen des überschüssigen Lösungsmittels und anschließender Trocknung. Die Trocknung wird bevorzugt bei Drücken zwischen 0,01 mbar und 1 bar und Temperaturen zwischen -20°C und 60°C für eine Dauer von üblicherweise zwischen 0,5 Stunden und 10 Stunden durchgeführt. Ebenso kann eine Gefriertrocknung zum Entfernen des Lösemittels verwendet werden.

Bevorzugt kann man nach Umsetzung der Reaktionsprodukte ein oder mehrere Wechsel des Lösungsmittels oder der Lösemittelgemische vornehmen. Insbesondere bei der Herstellung von erfindungsgemäßen Polyurethanen mit einer Dichte < 200 g/l ist es von Vorteil, einen Lösemittelwechsel vorzunehmen. Bei der Wahl des Lösemittels sind jeweils 2 Aspekte zu beachten:
1) die Oberflächenspannung soll so gering wie möglich sein - daher sind Kohlenwasserstoffe und (teil-)halogenierte Kohlenwasserstoffe bevorzugte Lösemittel;
2) das Lösemittel soll zur Vermeidung des Schrumpfens unter den Trocknungsbedingungen (bevorzugt -20 bis 60°C) das Polymernetzwerk so geringfügig wie möglich plastifizieren, d.h. ein "Fällungsmittel" für das Polymer darstellen. Da solche Fluide offensichtlich ungeeignet sind für die Synthese des Polyurethan-Netzwerkes aus dem Isocyanat und der Isocyanatreaktiven Verbindung ist es vorteilhaft, zunächst das Netzwerk in einem das Netzwerk quellende Fluid vorzunehmen und dies anschliessend gegen ein Fluid mit geringem Quellungsvermögen auszutauschen.

Bevorzugt wird man nach der Umsetzung der Isocyanate (a) mit den gegenüber Isocyanaten reaktiven Verbindungen (b) das Lösungsmittel (f) entfernen, bevorzugt durch Trocknung, in dem man während des Trocknens einen Druck wählt, der kleiner ist als der kritische Druck des Lösemittels und eine Temperatur, die kleiner ist als die kritische Temperatur des verwendeten Lösemittels.

Die Umsetzung der Isocyanate (a) mit den gegenüber Isocyanaten reaktiven Verbindungen (b) und Kettenverlängerungsmitteln (c) kann bei üblichen Kennzahlen erfolgen, bevorzugt bei einer Kennzahl kleiner 1010. Die Kennzahl ist definiert durch das Verhältnis der insgesamt bei der Umsetzung eingesetzten Isocyanatgruppen der Komponente (a) zu den gegenüber Isocyanaten reaktiven Gruppen, d.h. den aktiven Wasserstoffen, der Komponenten (b) und (c). Bei einer Kennzahl von 1000 kommt auf eine Isocyanatgruppe der Komponente (a) ein aktives Wasserstoffatom, d.h. eine gegenüber Isocyanaten reaktive Funktion, der Komponenten (b) und (c). Bei Kennzahlen über 1000 liegen mehr Isocyanatgruppen als OH-Gruppen vor. Besonders bevorzugt führt man die Umsetzung der Isocyanate mit den gegenüber Isocyanaten reaktiven Gruppe sowie gegebenenfalls Kettenverlängerungsmitteln und/oder Vernetzungsmitteln (c) bei einer Kennzahl zwischen 950 und 1050 durch.

Verfahren zur Herstellung von Polyurethanen sind allgemein bekannt. Beispielsweise können die thermoplastischen Polyurethane durch Umsetzung von (a) Isocyanaten mit (b) gegenüber Isocyanaten reaktiven Verbindungen mit einem Molekulargewicht von 500 bis 10000 und gegebenenfalls (c) Kettenverlängerungsmitteln mit einem Molekulargewicht von 50 bis 499 gegebenenfalls in Gegenwart von (d) Katalysatoren und/oder (e) üblichen Hilfsstoffen herstellt werden.

Im Folgenden sollen beispielhaft die Ausgangskomponenten und Verfahren zur Herstellung der bevorzugten porösen Polyurethane dargestellt werden. Die bei der Herstellung der porösen Polyurethane üblicherweise verwendeten Komponenten (a) und (b) und bevorzugt (c) sowie bevorzugt (d) und gegebenenfalls (e) sollen im Folgenden beispielhaft beschrieben werden:
a) Als organische Isocyanate (a) können allgemein bekannte aromatische, aliphatische, cycloaliphatische und/oder araliphatische Isocyanate, bevorzugt aromatische Isocyanate mit mindestens zwei, besonders bevorzugt zwei bis vier Isocyanatgruppen eingesetzt werden, beispielsweise 2,2'-, 2,4'- und/oder 4,4'-Diphenylmethandiisocyanat (MDI), 1,5-Naphthylendiisocyanat (NDI), 2,4-und/oder 2,6-Toluylendiisocyanat (TDI), Diphenylmethandiisocyanat, 3,3'-Dimethyl-diphenyl-diisocyanat, 1,2-Diphenylethandiisocyanat und/oder Phenylendiisocyanat, Tri-, Tetra-, Penta-, Hexa-, Hepta- und/oder Oktamethylendiisocyanat, 2-Methyl-pentamethylen-diisocyanat-1,5, 2-Ethyl-butylen-diisocyanat-1,4, Pentamethylen-diisocyanat-1,5, Butylen-diisocyanat-1,4, 1-Isocyanato-3,3,5-trimethyl-5-isocyanatomethyl-cyclohexan (Isophoron-diisocyanat, IPDI), 1,4- und/oder 1,3-Bis(isocyanatomethyl)-cyclohexan (HXDI), 1,4-Cyclohexan-diisocyanat, 1-Methyl-2,4- und/oder -2,6-cyclohexan-diisocyanat und/oder 4,4'-, 2,4'- und 2,2'-Dicyclohexylmethandiisocyanat, besonders bevorzugt Toluoldiisocyant (TDI), Paraphenylendiisocyanat (PPDI), Naphthalin-diisocyanat (NDI), aus TDI, NDI und/oder PPDI durch Umsetzung mit tri- und höherfunktionellen Alkoholen erhältlichen Isocyanate mit einer Funktionalität von mindestens 3, die durch Trimerisierung von TDI und/oder PPDI erhältlichen trifunktionellen Isocyante, insbesondere das aus TDI durch Umsetzung mit trifunktionellen Alkoholen erhältlichen Isocyanat.
b) Als gegenüber Isocyanaten reaktive Verbindungen (b) können gegebenenfalls zusätzlich zu den eingangs dargestellten Verbindungen weitere, allgemein für diesen Zweck bekannte Verbindungen Verwendung finden, beispielsweise Polyesterole, Polyetherole und/oder Polycarbonatdiole, die üblicherweise auch unter dem Begriff "Polyole" zusammengefaßt werden, mit Molekulargewichten von 500 bis 12000 g/mol, bevorzugt 600 bis 6000, insbesondere 800 bis 4000, und bevorzugt einer mittleren Funktionalität von 1,8 bis 5. Bevorzugt setzt man ausschließlich die erfindungsgemäßen gegenüber Isocyanaten reaktive Verbindungen ein.
c) Als Kettenverlängerungs- und/oder Vernetzungsmittel (c) können allgemein bekannte aliphatische, araliphatische, aromatische und/oder cycloaliphatische Verbindungen mit einem Molekulargewicht von 50 bis 499 und einer Funktionalität von 2 bis 10 eingesetzt werden, beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxy-ethyl)-hydrochinon, Triole, wie 1,2,4-, 1,3,5-Trihydroxy-cyclohexan, Glycerin und Trimethylolpropan, niedermolekulare hydroxylgruppenhaltige Polyalkylenoxide auf Basis Ethylen- und/oder 1,2-Propylenoxid und den vorgenannten Diolen und/oder Triolen als Startermoleküle und/oder Diamine wie z.B. Diethyltoluendiamin und/oder 3,5-Dimethylthio-2,4-toluenediamin. Sofern zur Herstellung der Polyurethane Kettenverlänge-rungsmittel, Vernetzungsmittel oder Mischungen davon Anwendung finden, kommen diese zweckmäßigerweise in einer Menge von 0 bis 30 Gew.-%, vorzugsweise von 1 bis 30 Gew.-%, bezogen auf das Gewicht der insgesamt eingesetzten gegenüber Isocyanaten reaktiven Verbindungen (b) und (c), zum Einsatz.
d) Geeignete Katalysatoren, welche insbesondere die Reaktion zwischen den NCO-Gruppen der Diisocyanate (a) und den gegenüber Isocyanaten reaktiven Gruppen der Aufbaukomponenten (b) und (c), insbesondere den Hydroxylgruppen und/oder Aminogruppen beschleunigen, sind die nach dem Stand der Technik bekannten und üblichen tertiären Amine, wie z.B. Triethylamin, Dimethylcyc-Iohexylamin, N-Methylmorpholin, N,N'-Dimethylpiperazin, 2-(Dimethylamino-ethoxy)-ethanol, Diazabicyclo-(2,2,2)-octan und ähnliche sowie insbesondere organische Metallverbindungen wie Titansäureester, Eisenverbindungen wie z.B. Eisen-(III)- acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche.
e) Neben Katalysatoren (d) können den Aufbaukomponenten (a) bis (c) auch übliche Hilfsmittel (e) hinzugefügt werden. Genannt seien beispielsweise oberflächenaktive Substanzen, Flammschutzmittel, Keimbildungsmittel, Oxidationsstabilisatoren, Gleit- und Entformungshilfen, Farbstoffe und Pigmente, Stabilisatoren, z.B. gegen Hydrolyse, Licht, Hitze oder Verfärbung, anorganische und/oder organische Füllstoffe, Verstärkungsmittel.
f) Das Lösungsmittel (f), in dessen Gegenwart die Umsetzung der Isocyanate mit der Komponente (b) und gegebenenfalls (c) erfolgt, wurde bereits eingangs dargestellt.

Nähere Angaben über die oben genannten Hilfsmittel- und Zusatzstoffe sind der Fachliteratur zu entnehmen, z.B. aus Plastics Additive Handbook, 5th edition, H. Zweifel, ed, Hanser Publishers, München, 2001. Alle in dieser Schrift genannten Molekulargewichte weisen die Einheit [g/mol] auf.

Die nach den erfindungsgemäßen Verfahren herstellbaren porösen Polyurethane finden bevorzugt Anwendung als Dämmmaterialien zur thermischen und akkustischen Isolation.

### Beispiele

Die in der Tabelle 1 dargestellten gegenüber Isocyanaten reaktiven Mischungen wurden in einem geschlossenen Gefäß bei Raumtemperatur und einer Kennzahl von 1000 mit den jeweiligen in der Tabelle 2 dargestellten Mischungen enthaltend Isocyanate umgesetzt.

**Tabelle 1:**

| | Beispiel 1 | Beispiel 2 | Beispiel 3 | Beispiel 4 | Beispiel 5 |
|---|---|---|---|---|---|
| | | | | | |
| Boltorn® H20 | 0,95 g | 0,95 g | | | 0,71 g |
| Boltorn® H30 | | | 0,97 g | | |
| Boltorn® H40 | | | | 0,98 g | |
| Butanon | 11,17 g | | | | |
| Propanon | | 10,96 g | 10,96 g | 10,96 g | 11,14 g |
| DBTDL | 84,5 µl | 84,5 µl | 84,5 µl | 84,5 µl | 84,5 µl |

| | | | | | |
|---|---|---|---|---|---|
| Boltorn® H20: Dendritischer Polyesteralkohol, M_{w} ∼ 2100 g / mol, Polydispersität ∼ 1.3, T_{g} ∼ 30 °C, OH-Zahl ~ 490-530 mg KOH / g, Säurezahl ∼ 9 mg KOH / g maximum Boltorn® H30: Dendritischer Polyesteralkohol, M_{w} ∼ 3500 g / mol, Polydispersität ∼ 1.5, T_{g} ∼ 35 °C, OH-Zahl ∼ 480-510 mg KOH / g, Säurezahl ∼ 10 mg KOH / g maximum Boltorn® H40: Dendritischer Polyesteralkohol, M_{w} ∼ 5100 g / mol, Polydispersität ∼ 1.8, T_{g} ∼ 40 °C, OH-Zahl ∼ 470-500 mg KOH / g, Säurezahl ∼ 11 mg KOH / g maximum DBTDL: Dibutylzinndilaurat. | | | | | |

**Tabelle 2:**

| | Beispiel 1 | Beispiel 2 | Beispiel 3 | Beispiel 4 | Beispiel 5 |
|---|---|---|---|---|---|
| | | | | | |
| Basonat® TU 75E | 2,73 g | 2,73 g | 2,71 g | 2,69 g | 2,05 g |
| Butanon | 10,13 g | | | | |
| Propanon | | 9,94 g | 9,94 g | 9,94 g | 10,39 g |

| | | | | | |
|---|---|---|---|---|---|
| Basonat® TU 75E (BASF Aktiengesellschaft): Ein polyfunktionelles TDI-Addukt mit einem Gewichtsanteil von 75 Gew.-% in Ethylacetat, ∼13.3 % NCO-Gehalt | | | | | |

Nach ca. 3 Tagen wurden die entsprechenden Polyurethangele aus dem Reaktionsgefäß entnommen und in einen Behälter mit Pentan überführt. Das Volumenverhältnis von Pentan zum Polyurethangel betrug ca. 10 : 1. Nach 2 Tagen wurde das Pentan durch eine gleiche. Menge frischen Pentans ersetzt. Nach weiteren 2 Tagen wurde das Gel entnommen und zuerst für 3 Tage bei Normaldruck, anschließend für 2 Tage bei einer Temperatur von 60°C und einem Druck von 100 mbar getrocknet.

Die Produkte der Beispiele 1 bis 5 wiesen die in der Tabelle 3 dargestellten Eigenschaften auf:

**Tabelle 3:**

| | Beispiel 1 | Beispiel 2 | Beispiel 3 | Beispiel 4 | Beispiel 5 |
|---|---|---|---|---|---|
| Dichte [kg/m³] | 440 | 270 | 270 | 280 | 210 |
| Porengröße [nm] | 58 | 140 | 47 | 110 | 150 |
| spez. Oberfläche [m²/g] | 150 | 100 | 124 | 135 | 88 |
| Porosität [%] | 68 | 80 | 80 | 80 | 85 |

Dichte gemessen durch Gas-Pyknometrie (DIN 66137)
Porengröße gemessen durch Stickstoffsorption (DIN 66134)
Spezifische Oberfläche gemessen nach BET (DIN 66131)
Porosität gemessen durch Hg-Intrusion (DIN 66133)

Die Porenanalyse in Tabelle 3 zeigt, dass die aus den in Tab 1 und 2 aufgeführten Komponenten herstellten Gele nach dem subkritischen Trocknen nanoporöse Materialien sind. Insbesondere zeigt der Vergleich der Hg-Intrusion und der Stickstoffsorption, dass der Porenanteil kleiner 1 µm größer als 95 % ist. Die mittlere Porengröße von 50 - 150 nm macht diese Materialien besonders vorteilhaft zur Verwendung als Dämmmaterial in der Thermoisolation. Alle Materialien zeigten hohe mechanische Stabilität und geringe Sprödigkeit.

## Patentansprüche

1. Verfahren zur Herstellung von porösen Polyisocyanat-Polyadditionsprodukten durch Umsetzung von (a) Isocyanaten mit (b) gegenüber Isocyanaten reaktiven Verbindungen in Gegenwart von gegenüber Isocyanaten inertem Lösungsmittel (f) und anschließendem Entfernen des Lösungsmittels (f) aus dem Polyurethan, **dadurch gekennzeichnet, dass** man als (b) gegenüber Isocyanaten reaktive Verbindungen solche einsetzt, die eine Funktionalität gegenüber Isocyanaten von mindestens 6 und ein Molekulargewicht von mindestens 1000 g/mol aufweisen.

2. Verfahren nach Anspruch 1, **dadurch gekennzeichnet, dass** man als gegenüber Isocyanaten reaktive Verbindungen solche einsetzt, die eine Hydroxylzahl von mindestens 100 mg KOH/g aufweisen.

3. Verfahren nach Anspruch 1, **dadurch gekennzeichnet, dass** man als gegenüber Isocyanaten reaktive Verbindungen Estergruppen enthaltende Polyole einsetzt.

4. Verfahren nach Anspruch 1, **dadurch gekennzeichnet, dass** man aromatische Isocyanate mit mindestens zwei Isocyanatgruppen einsetzt.

5. Verfahren nach Anspruch 1 **dadurch gekennzeichnet, dass** man die Umsetzung von (a) Isocyanaten mit (b) gegenüber Isocyanaten reativen Verbindungen in Gegenwart von einem die Isocyanatgruppen aktivierendem Katalysator (d) durchführt.

6. Verfahren nach Anspruch 1, **dadurch gekennzeichnet, dass** man als Lösungsmittel (f) ein Lösungsmittel einsetzt, in dem die eingesetzten Isocyanate und Isocyanat-reaktiven Komponenten bei 298 K zu mindestens 1 Gew.-%, bezogen auf das Gesamtgewicht der Mischung, löslich oder dispergierbar sind und durch Umsetzung der (a) Isocyanate mit den (b) gegenüber Isocyanaten reaktiven Verbindungen ein Gelkörper resultiert, in dem der Anteil an präzipitiertem Reaktionsprodukt kleiner als 1 Gew.-%, bezogen auf das Gesamtgewicht der Mischung, ist.

7. Verfahren nach Anspruch 1, **dadurch gekennzeichnet, dass** man nach Umsetzung der Reaktionsprodukte ein oder mehrere Wechsel des Lösungsmittels oder der Lösemittelgemische vornimmt.

8. Verfahren nach Anspruch 1, **dadurch gekennzeichnet, dass** man als Lösungsmittel (f) aliphatische Ketone und Ester einsetzt.

9. Verfahren nach Anspruch 1, **dadurch gekennzeichnet, dass** der Gewichtsanteil des Lösungsmittels (f) bezogen auf das Gesamtgewicht der bei der Herstellung des Polyurethanschaumstoffes eingesetzten Komponenten einschließlich des Lösungsmittels zwischen 50 Gew.-% und 99 Gew.-% beträgt.

10. Verfahren nach Anspruch 1, **dadurch gekennzeichnet, dass** man nach der Umsetzung der Isocyanate (a) mit den gegenüber Isocyanaten reaktiven Verbindungen (b) das Lösungsmittel (f) entfernt, indem man während des Trocknens einen Druck wählt, der kleiner ist als der kritische Druck des Lösemittels (f) und eine Temperatur, die kleiner ist als die kritische Temperatur des verwendeten Lösemittels (f).

11. Verfahren nach Anspruch 1, **dadurch gekennzeichnet, dass** man die Umsetzung der Isocyanate (a) mit den gegenüber Isocyanaten reaktiven Gruppen der gegenüber Isocyanaten reaktiven Verbindungen (b) sowie gegebenenfalls der Kettenverlängerungsmitteln und/oder Vernetzungsmitteln (c) bei einer Kennzahl zwischen 950 und 1050 durchführt.

12. Poröse Polyisocyanat-Polyadditionsprodukte erhältlich durch ein Verfahren gemäß einem der Ansprüche 1 bis 11.

13. Poröse Polyisocyanat-Polyadditionsprodukte mit einer Dichte zwischen 30 kg/m³ und 500 kg/m³ und einer intrinsischen Oberfläche > 50 m²/g bestimmt durch Stickstoff-Sorptionsmessung nach DIN 66131 auf der Basis von gegenüber Isocyanaten reaktiven Verbindungen (b) mit einer Funktionalität gegenüber Isocyanaten von mindestens 6 und einem Molekulargewicht von mindestens 1000 g/mol.

## Claims

1. A process for producing porous polyisocyanate polyaddition products by reacting (a) isocyanates with (b) compounds which are reactive toward isocyanates in the pretence of solvent (f) which is inert toward isocyanates and subsequently removing the solvent (f) from the polyurethane, herein compounds having a functionality toward isocyanates of at least 6 and a molecular weight of at least 1000 g/mol are used as (b) compounds which are reactive toward isocyanates.

2. The process according to claim 1, wherein compounds which have a hydroxyl number of at least 100 mg KOH/g are used as compounds which are reactive toward isocyanates.

3. The process according to claim 1, wherein polyols comprising ester groups are used as compounds which are reactive toward isocyanates.

4. The process according to claim 1, wherein aromatic isocyanates heaving at least two isocyanate groups are used.

5. The process according to claim 1, wherein the reaction of (a) isocyanates with (b) compounds which are reactive toward isocyanates is carried out on the presence of a catalyst (d) which activates the isocyanate groups.

6. The process according to claim 1, wherein a solvent in which the isocyanates and isocyanate-reactive components used are soluble or dispersible to an extent of at least 1% by weight, based on the total weight of the mixture, at 298 K and the reaction of the (a) isocyanates with the (b) compounds which are reactive toward isocyanates results in a gel body in which the proportion of precipitated reaction product is less than 1% by weight, based on the total weight of the mixture, is used as solvent (f).

7. The process according to claim 1, wherein one or more changes of the solvent or the solvent mixtures is carried out after reaction of the reactants.

8. The process according to claim 1, wherein aliphatic ketones and esters are used as solvents (f).

9. The process according to claim 1, wherein the proportion by weight of the solvent (f), based on the total weight of the components used in the production of the Polyurethane foam including the solvent, is in the range from 50% by weight to 99% by weight.

10. The process according to claim 1, wherein the solvent (f) is removed after the redaction of the isocyanates (a) with the compounds (b) which are reactive toward isocyanates by selecting a pressure which is less than the critical pressure of the solvent (f) and a temperature which is less than the critical temperature of the solvent (f) during dying.

11. The process according to claim 1, wherein the reaction of the isocyanates (a) with the isocyanate-reactive groups of the compounds (b) which are reactive toward isocyanates and, if appropriate, the chain extenders and/or crosslinkers (c) is carried out at an index in the range from 950 to 1050.

12. A porous polyisocyanate polyaddition product obtainable by a process according to any of claims 1 to 11.

13. A porous polyisocyanate polyaddition product having a density in the range from 30 kg/m³ to 500 kg/m³ and an intrinsic surface area of > 50 m²/g determined by nitrogen sorption measurement in accordance with DIN 66131 and based on compounds (b) which are reactive toward isocyanates and have a functionality toward isocyanates of at least 6 and a molecular weight of at least 1000 g/mol.

## Revendications

1. Procédé pour la préparation de produits de polyaddition de polyisocyanates poreux par mise en réaction de (a) isocyanates avec (b) des composés réactifs vis-à-vis d'isocyanates, en présence de solvants (f) inertes vis-à-vis d'isocyanates et séparation subséquente du solvant (f) d'avec le polyuréthanne, **caractérisé en ce qu'**on utilise en tant que composés (b) réactifs vis-à-vis d'isocyanates ceux qui présentent une fonctionnalité vis-à-vis d'isocyanates d'au moins 6 et une masse moléculaire d'au moins 1 000 g/mole.

2. Procédé selon la revendication 1, **caractérisé en ce qu'**on utilise en tant que composés réactifs vis-à-vis d'isocyanates ceux qui présentent un indice de groupes hydroxy d'au moins 100 mg de KOH/g.

3. Procédé selon la revendication 1, **caractérisé en ce qu'**on utilise en tant que composés réactifs vis-à-vis d'isocyanates des polyols contenant des groupes ester.

4. Procédé selon la revendication 1, **caractérisé en ce qu'**on utilise des isocyanates aromatiques comportant au moins deux groupes isocyanate.

5. Procédé selon la revendication 1, **caractérisé en ce qu'**on effectue la réaction de (a) isocyanates avec (b) des composés réactifs vis-à-vis d'isocyanates en présence d'un catalyseur (d) activant les groupes isocyanate.

6. Procédé selon la revendication 1, **caractérisé en ce qu'**on utilise comme solvant (f) un solvant dans lequel les isocyanates et composants réactifs vis-à-vis d'isocyanates utilisés sont à 298 K solubles ou dispersables à raison d'au moins 1 % en poids, par rapport au poids total du mélange et, par mise en réaction des (a) isocyanates avec les (b) composés réactifs vis-à-vis d'isocyanates, on obtient un corps de gel dans lequel la proportion de produit de réaction précipité est inférieure à 1 % en poids, par rapport au poids total du mélange .

7. Procédé selon la revendication 1, **caractérisé en ce qu'**après réaction des produits de réaction on effectue un ou plusieurs changements du solvant ou du mélange de solvants.

8. Procédé selon la revendication 1, **caractérisé en ce qu'**on utilise comme solvant (f) des esters ou cétones aliphatiques.

9. Procédé selon la revendication 1, **caractérisé en ce que** la proportion en poids du solvant (f), par rapport au poids total des composants utilisés dans la préparation de la mousse de polyuréthanne, y compris le solvant, est comprise entre 50 % en poids et 99 % en poids.

10. Procédé selon la revendication 1, **caractérisé en ce qu'**après la réaction des isocyanates (a) avec les composés (b) réactifs vis-à-vis d'isocyanates on élimine le solvant (f) en choisissant pendant le séchage une pression qui est inférieure à la pression critique du solvant (f) et une température qui est inférieure à la température critique du solvant (f) utilisé.

11. Procédé selon la revendication 1, **caractérisé en ce qu'**on effectue la réaction des isocyanates (a) avec les groupes réactifs vis-à-vis d'isocyanates des composés (b) réactifs vis-à-vis d'isocyanates ainsi qu'éventuellement des prolongateurs de chaîne et/ou agents de réticulation (c) à une constante comprise entre 950 et 1 050.

12. Produits de polyaddition de polyisocyanates poreux pouvant être obtenus par un procédé selon l'une quelconque des revendications 1 à 11.

13. Produits de polyaddition de polyisocyanates poreux ayant une densité comprise entre 30 kg/m³ et 500 kg/m³ et une surface spécifique > 50 m²/g, déterminée par mesure de la sorption d'azote selon DIN 66131, à base de composés (b) réactifs vis-à-vis d'isocyanates, ayant une fonctionnalité vis-à-vis d'isocyanates d'au moins 6 et une masse moléculaire d'au moins 1 000 g/mole.
